# EUROPÄISCHE PATENTSCHRIFT

(11) **EP 4 552 954 B1**
(45) Veröffentlichungstag und Bekanntmachung des Hinweises auf die Patenterteilung: **18.02.2026**
(21) Anmeldenummer: 24196500.3
(22) Anmeldetag: 26.08.2024
(51) Int. Cl.: B62D 25/04

(54) **FAHRZEUG**
VEHICLE
VÉHICULE

(30) Priorität: 07.11.2023 DE 102023130820
(43) Veröffentlichungstag der Anmeldung: 14.05.2025
(73) Patentinhaber: Rheinmetall Landsysteme GmbH, 29345 Südheide (DE)
(72) Erfinder: OLEY, Dieter, 34127 Kassel (DE); MARTINI, Gunnar, 34317 Habichtswald (DE)
(74) Vertreter: HKW Intellectual Property PartG mbB

(56) Entgegenhaltungen:
- EP-B1- 2 964 527
- DE-A1- 2 818 539
- JP-A- 2020 199 818

## Beschreibung

Die vorliegende Erfindung betrifft ein Fahrzeug.

Zum Verlasten eines Fahrzeugs, insbesondere eines Radfahrzeugs, unter einem Luftfahrzeug können an dem Fahrzeug geeignete Anschlagmittel, wie beispielsweise Gurte oder Ketten, angeschlagen werden. Diese Anschlagmittel können gemäß betriebsinternen Kenntnissen beispielsweise an einem Dach des Fahrzeugs oder dem Dach nahen Bauteilen befestigt werden. Dazu kann das Fahrzeug an dem Dach mit geeigneten Ösen ausgestattet sein. Wird nun auf die Anschlagmittel eine Zugkraft aufgebracht, wird das Fahrzeug an einem Fahrzeugaufbau des Fahrzeugs nach oben gezogen.

Dadurch wird ein Fahrgestell des Fahrzeugs von dem Fahrzeugaufbau her in die Höhe gezogen. Das Fahrgestell hängt dann nur über Fahrgestell-Fahrzeugaufbau-Schnittstellen an dem Fahrzeugaufbau, wodurch die Fahrgestell-Fahrzeugaufbau-Schnittstellen mechanisch belastet werden. Diese Belastungen sind nur schwer mit den üblichen Lastkollektiven für derartige Fahrgestell-Fahrzeugaufbau-Schnittstellen zwischen dem Fahrzeugaufbau und dem Fahrgestell vereinbar. Es ist daher wünschenswert, die Fahrgestell-Fahrzeugaufbau-Schnittstellen mechanisch zu entlasten.

Bei einer Befestigung der Anschlagmittel direkt an dem Fahrgestell hingegen ergäbe sich die Problematik, die Anschlagmittel dann aufwändig an Seitenwänden des Fahrzeugaufbaus entlang nach oben in Richtung des Luftfahrzeugs zu führen, um bei Bewegungen des Fahrzeugs während des Verlastens desselben ein Durchscheuern der Anschlagmittel an den Seitenwänden und Kanten, wie beispielsweise Dachkanten, zu vermeiden. Hierzu könnten Schienen, Ösen oder Rollen zum Einsatz kommen, um die Anschlagmittel nach oben zu führen. Diese zusätzlichen Bauteile hätten jedoch einen negativen Einfluss auf die Gewichtsbilanz und eine Fahrzeugbreite des Fahrzeugs. Ferner wäre es noch möglich, die Anschlagmittel über Ösen an einem Heck und einer Front des Fahrzeugs zu befestigen.

Die vorgenannten Lösungsansätze erfordern jedoch, dass entweder bei dem Anbringen der Anschlagmittel direkt an dem Fahrgestell eine wie oben beschriebene Führung der Anschlagmittel außen entlang des Fahrzeugaufbaus notwendig wird oder bei dem Anbringen der Anschlagmittel an dem Dach eine sehr hohe Belastung der Fahrgestell-Fahrzeugaufbau-Schnittstellen stattfindet. Gegebenenfalls notwendige Führungshilfen für die Anschlagmittel an den Seitenwänden des Fahrzeugsaufbaus führen ferner zu einem größeren Fahrzeuggewicht und zu einer größeren Fahrzeugbreite. Dies stellt ein Risiko für die Zulassungsfähigkeit des Fahrzeugs dar.

Die JP 2020 199818 A zeigt ein unbemanntes Luftfahrzeug mit mehreren Anschlagmitteln, die an einem Fahrzeug zum Transport desselben angeschlagen werden können.

Die DE 28 18 539 A1 beschreibt einen Bausatz für ein Lastenaufnahmesystem von Hubschrauber-Außenlasten bestehend aus einem Gurtgehänge zur Befestigung der Last an einem Traghaken bzw. einer Aufhängevorrichtung eines Hubschraubers, wobei von der Last ausgehende stufenlos verstellbare Gurtstränge nach oben in Richtung des Hubschraubers zentral in einen an dem dortigen Traghaken anbringbaren, geschlossenen und aus mehreren vernähten Gurtlagen gebildeten Ring zusammenlaufen, an dem sie mit ihren Enden eingeschlauft sind.

Die EP 2 964 527 B1 zeigt Anschlagmittel, mit deren Hilfe ein Fahrzeug zum Transport außenseitig an einem Luftfahrzeug angeschlagen werden kann.

Vor diesem Hintergrund besteht eine Aufgabe der vorliegenden Erfindung darin, ein verbessertes Fahrzeug zur Verfügung zu stellen.

Demgemäß wird ein Fahrzeug mit einem Fahrgestellrahmen, einem Fahrzeugaufbau, den der Fahrgestellrahmen trägt, und mehreren Anschlagmitteln vorgeschlagen, die mit dem Fahrgestellrahmen verbunden sind. Dabei weist der Fahrzeugaufbau tragende Strukturen und ein Dach auf, wobei die Anschlagmittel durch die tragenden Strukturen hindurch von dem Fahrgestellrahmen zu dem Dach geführt sind.

Dadurch, dass die Anschlagmittel direkt mit dem Fahrgestellrahmen verbunden sind, erfolgt eine verminderte Lasteinleitung in den Fahrzeugaufbau selbst. Fahrgestellrahmen-Fahrzeugaufbau-Schnittstellen zwischen dem Fahrgestellrahmen und dem Fahrzeugaufbau werden hierdurch mechanisch geringer belastet. Dadurch, dass die Anschlagmittel durch die tragenden Strukturen hindurchgeführt sind, kann auf seitliche Führungen für die Anschlagmittel verzichtet werden, wodurch sich beispielsweise eine Gewichtsersparnis und eine Reduzierung einer Fahrzeugbreite des Fahrzeugs ergibt. Hierdurch kann auch eine bessere Nutzung einer maximal zulässigen Fahrzeugbreite erzielt werden. Ferner reduzieren sich die Risiken bei der Zulassung des Fahrzeugs, und es ergibt sich eine Zeitersparnis bei einem Verlasten des Fahrzeugs.

Das Fahrzeug ist insbesondere ein Luftlandefahrzeug. Daher können vorliegend die Begriffe "Fahrzeug" und "Luftlandefahrzeug" beliebig gegeneinander getauscht werden. Das Fahrzeug kann ein geschütztes Fahrzeug sein. Dies ist jedoch nicht zwingend erforderlich. Darunter, dass das Fahrzeug "geschützt" ist, kann vorliegend insbesondere zu verstehen sein, dass das Fahrzeug gegen Beschuss, Sprengfallen, unkonventionelle Spreng- oder Brandvorrichtungen (USBV, Engl.: Improvised Explosive Devices, IED), Minen oder dergleichen geschützt ist. Wie zuvor erwähnt, ist es jedoch nicht erforderlich, dass das Fahrzeug ein geschütztes Fahrzeug ist. Das Fahrzeug kann ein Personenkraftwagen oder ein Nutzfahrzeug sein.

Das Fahrzeug ist vorzugsweise ein Radfahrzeug. Das Fahrzeug kann jedoch auch ein Kettenfahrzeug sein. Nachfolgend wird jedoch davon ausgegangen, dass das Fahrzeug ein Radfahrzeug ist. Das Fahrzeug ist insbesondere ein militärisches Fahrzeug. Daher kann das Fahrzeug auch als Militärfahrzeug bezeichnet werden. Das Fahrzeug kann einen Allradantrieb aufweisen. Daher kann das Fahrzeug auch als Allradfahrzeug bezeichnet werden. Das Fahrzeug ist insbesondere ein chassisbasiertes Fahrzeug und kann daher auch als solches bezeichnet werden.

Das Fahrzeug kann mit Hilfe der Anschlagmittel verlastet werden. Unter einem "Verlasten" des Fahrzeugs ist insbesondere zu verstehen, dass das Fahrzeug beispielsweise mit Hilfe eines Luftfahrzeugs transportiert werden kann. Hierzu wird beispielsweise ein Kran oder eine Winde des Luftfahrzeugs mit Hilfe weiterer Anschlagmittel mit den Anschlagmitteln verbunden, die an dem Fahrgestellrahmen angebracht sind. Das Fahrzeug wird dann mit Hilfe des Luftfahrzeugs angehoben und kann so verlastet oder transportiert werden. Das Fahrzeug wird dabei bevorzugt als Außenlast des Luftfahrzeugs transportiert. Dies bedeutet insbesondere, dass das Fahrzeug nicht innerhalb des Luftfahrzeugs, sondern außenseitig an diesem transportiert wird.

Der Fahrgestellrahmen kann Teil eines Fahrgestells des Fahrzeugs sein. Neben dem Fahrgestellrahmen umfasst das Fahrgestell beispielsweise um Radachsen drehbare Räder. Ferner kann das Fahrgestell neben dem Fahrgestellrahmen Radaufhängungen aufweisen, wobei jedem Rad eine derartige Radaufhängung zugeordnet sein kann. Die Radaufhängungen können beispielsweise als Einzelradaufhängungen für die Räder ausgeführt sein. Der Fahrgestellrahmen umfasst vorzugsweise zwei parallel zueinander und beabstandet voneinander angeordnete Längsträger, welche mit Hilfe von senkrecht zu den Längsträgern orientierten Querträgern miteinander verbunden sind. Beispielsweise sind die Querträger mit den Längsträgern verschraubt, vernietet und/oder verschweißt. Der Fahrgestellrahmen ist bevorzugt ein Leiterrahmen. Vorliegend können daher die Begriffe "Fahrgestellrahmen" und "Leiterrahmen" beliebig gegeneinander getauscht werden.

Die Anschlagmittel sind beispielsweise mit den Längsträgern des Fahrgestellrahmens verbunden. Hierzu sind an den Längsträgern insbesondere Anbindungspunkte vorgesehen, an denen die Anschlagmittel mit dem Fahrgestellrahmen verbunden sind. Die Anbindungspunkte können beispielsweise an dem Fahrgestellrahmen angebrachte Bauelemente, beispielsweise in der Form von Ösen oder Schlaufen, sein oder aufweisen, in welche die Anschlagmittel eingehängt werden können, um die Anschlagmittel an den Anbindungspunkten mit dem Fahrgestell, insbesondere mit dem Fahrgestellrahmen, zu verbinden. Die Anbindungspunkte können jedoch auch Schweißverbindungen oder Schraubverbindungen sein. Jedem Anschlagmittel ist insbesondere ein derartiger Anbindungspunkt zugeordnet. Vorzugsweise sind zumindest vier Anbindungspunkte vorgesehen. Beispielsweise sind an einem der Längsträger zwei Anbindungspunkte und an dem anderen der beiden Längsträger zwei weitere Anbindungspunkte vorgesehen.

Die Anzahl der Anschlagmittel ist beliebig. Insbesondere sind zumindest drei Anschlagmittel vorgesehen. Besonders bevorzugt sind jedoch vier Anschlagmittel vorgesehen. Es können jedoch auch mehr als vier Anschlagmittel vorgesehen sein. Unter "Anschlagmitteln" sind vorliegend Einrichtungen zu verstehen, welche eine Verbindung zwischen einer Last, vorliegend dem Fahrzeug, und einem Hebezeug, wie beispielsweise einem Kran oder einer Winde, herstellen. Anschlagmittel können beispielsweise Gurte, Seile, Ketten, Hebebänder, Hebegurtschlingen, Rundschlingen und lösbare Verbindungsteile, wie beispielsweise Schäkel oder Wirbel, sein. Vorliegend kommen als Anschlagmittel beispielsweise Seile, insbesondere Drahtseile, Gurte, insbesondere Textilgurte, Ketten oder auch Biegestäbe zur Anwendung. Unter einem "Biegestab" ist vorliegend ein stabförmiges Bauteil zu verstehen, welches durch das Aufbringen einer Kraft elastisch verformt, insbesondere verbogen, werden kann.

Dass die Anschlagmittel mit dem Fahrgestellrahmen des Fahrzeugs "verbunden" sind, bedeutet vorliegend, dass die Anschlagmittel sowohl unlösbar als auch lösbar an dem Fahrgestellrahmen befestigt sein können. Beispielsweise sind die Anschlagmittel mit dem Fahrgestellrahmen verschweißt. Alternativ können die Anschlagmittel auch an wie zuvor erwähnten Anbindungspunkten lösbar mit dem Fahrgestellrahmen verbunden sein. Hierzu kann beispielsweise zwischen den Anschlagmitteln und dem Fahrgestellrahmen jeweils eine Schraubverbindung oder eine Einhängeverbindung vorgesehen sein. Die Art der Verbindung zwischen den Anschlagmitteln und dem Fahrgestellrahmen ist jedoch beliebig.

Der Fahrzeugaufbau kann auch als Karosserie oder als Fahrzeugzelle bezeichnet werden. Die Begriffe "Fahrzeugaufbau", "Karosserie" und "Fahrzeugzelle" sind daher beliebig gegeneinander tauschbar. Der Fahrzeugaufbau kann gepanzert sein. Dies ist jedoch nicht zwingend erforderlich. Der Fahrzeugaufbau kann skelettartig aufgebaut sein. Beispielsweise kann der Fahrzeugaufbau offene Seitenwände aufweisen. "Offen" heißt hierbei, dass die Seitenwände fachwerkartig oder skelettartig aufgebaut sein können. Die Seitenwände können rahmenförmig sein. An den Seitenwänden können verschwenkbare Türen vorgesehen sein. Die Türen sind optional. Das Dach kann ebenfalls offen sein. Das heißt, dass das Dach nicht zwingend geschlossen sein muss. Auch das Dach kann fachwerkartig oder skelettartig aufgebaut sein. Das Dach kann rahmenförmig sein und die tragenden Strukturen miteinander verbinden.

Der Fahrzeugaufbau umschließt oder umgrenzt einen Fahrzeuginnenraum oder Innenraum, in dem sich eine Besatzung des Fahrzeugs aufhalten kann. Der Innenraum kann beispielsweise über die vorgenannten Türen von einer Umgebung des Fahrzeugs her zugänglich sein. Der Fahrzeugaufbau kann neben dem Dach und den tragenden Strukturen einen Boden aufweisen. Dabei verbinden die tragenden Strukturen den Boden mit dem Dach. Die tragenden Strukturen verlaufen somit bevorzugt zwischen dem Dach und dem Boden. Der Boden und das Dach sind bevorzugt fest mit den tragenden Strukturen verbunden. Beispielsweise sind der Boden und das Dach mit den tragenden Strukturen verschraubt, vernietet und/oder verschweißt.

Die tragenden Strukturen sind insbesondere tragende Fahrzeugsäulen und können daher auch als solche bezeichnet werden. Demgemäß können vorliegend die Begriffe "tragende Struktur" und "tragende Fahrzeugsäule" beliebig gegeneinander getauscht werden. "Tragend" heißt im vorliegenden Fall, dass mit Hilfe der tragenden Strukturen Kräfte von dem Boden auf das Dach oder umgekehrt übertragen werden können. Die tragenden Strukturen versteifen den Fahrzeugaufbau. Insbesondere kommt den tragenden Strukturen im Falle eines Unfalls mit einem Überschlagen des Fahrzeugs die lebenserhaltende Aufgabe zu, den Fahrzeugaufbau gegen eine vertikale Verformung zu stabilisieren. Ferner sind die tragenden Strukturen zur Aufnahme von Kräften bei einem Seitenaufprall geeignet, damit die Besatzung des Fahrzeugs unversehrt bleibt.

Vorzugsweise sind vier oder sechs tragende Strukturen vorgesehen, die jeweils in Paaren beabstandet voneinander an den Seitenwänden des Fahrzeugsaufbaus platziert sind. Die tragendenden Strukturen sind insbesondere hohl. Beispielsweise sind die tragenden Strukturen rohrförmig. Die tragenden Strukturen können einen beliebigen Querschnitt, beispielsweise einen kreisrunden oder einen rechteckförmigen Querschnitt, aufweisen. Die tragenden Strukturen können Rohre oder Rechteckträger sein. Die tragenden Strukturen können umfänglich geschlossen sein. Dies ist jedoch nicht zwingend erforderlich. Alternativ können die tragenden Strukturen auch Durchbrüche, Ausnehmungen, Bohrungen oder dergleichen aufweisen. Hierdurch können die tragenden Strukturen jeweils eine skelettartige, fachwerkartige oder gitterartige Struktur aufweisen. Dies ermöglicht eine Gewichtsreduktion. Die tragenden Strukturen können beispielsweise aus Stahlrohren und/oder aus Aluminiumrohren gefertigt sein. Auch Faserverbundwerkstoffe können eingesetzt werden.

Jedem Anschlagmittel ist bevorzugt genau eine tragende Struktur zugeordnet. Die Anschlagmittel sind zumindest abschnittsweise innerhalb der jeweiligen tragenden Struktur von dem Fahrgestellrahmen hin zu dem Dach geführt. Die Anschlagmittel sind somit zumindest abschnittsweise innerhalb der tragenden Strukturen angeordnet. Dies schließt jedoch nicht aus, dass die Anschlagmittel auch zumindest abschnittsweise außerhalb der tragenden Strukturen geführt sein können oder verlaufen können.

Die Anschlagmittel sind insbesondere Teil eines in dem Fahrzeug verbauten Anschlagsystems zum Verlasten des Fahrzeugs. Das Anschlagsystem kann nachrüstbar sein. Um das Anschlagsystem nachrüsten zu können, werden die tragenden Strukturen hohl oder rohrförmig ausgebildet, so dass die Anschlagmittel durch die tragenden Strukturen hindurchgeführt werden können. Die tragenden Strukturen können Teil des Anschlagsystems sein. Dies ist jedoch nicht zwingend erforderlich.

Gemäß einer Ausführungsform sind die tragenden Strukturen tragende Fahrzeugsäulen, insbesondere A-Säulen, B-Säulen und/oder C-Säulen.

Es kann beispielsweise ein Paar an ersten tragenden Strukturen in Form von A-Säulen, ein Paar an zweiten tragenden Strukturen in Form von B-Säulen und ein Paar an dritten tragenden Strukturen in Form von C-Säulen vorgesehen sein.

Das heißt, es können beispielsweise sechs derartige tragende Strukturen vorgesehen sein. Es können jedoch beispielsweise auch nur vier tragende Strukturen, in diesem Fall in Form von A-Säulen und B-Säulen, vorgesehen sein. Dabei können die Anschlagmittel beispielsweise durch die ersten tragenden Strukturen und die zweiten tragenden Strukturen, durch die ersten tragenden Strukturen und die dritten tragenden Strukturen oder durch die zweiten tragenden Strukturen und die dritten tragenden Strukturen hindurchgeführt sein. In den vorgenannten Fällen sind genau vier Anschlagmittel vorgesehen. Für den Fall, dass genau sechs Anschlagmittel vorgesehen sind, kann jeder der vorgenannten tragenden Strukturen ein Anschlagmittel zugeordnet sein.

Gemäß einer weiteren Ausführungsform sind die tragenden Strukturen innenseitig und/oder die Anschlagmittel außenseitig mit einer reibungsreduzierenden Beschichtung beschichtet.

Die Beschichtung kann beispielsweise ein Gleitmittel sein. Beispielsweise kann für die Beschichtung Kupferpaste eingesetzt werden. Die Beschichtung kann auch eine innenseitig an den tragenden Strukturen und/oder außenseitig an den Anschlagmitteln angebrachte Kunststoffbeschichtung, beispielsweise in Form einer Polytetrafluorethylen-Beschichtung (PTFE-Beschichtung), sein. Insbesondere weisen die Anschlagmittel jeweils eine Außenseite auf. Diese Außenseite ist einer jeweiligen Innenseite der tragenden Strukturen zugewandt. Die tragenden Strukturen umschließen jeweils einen Hohlraum, in dem das der jeweiligen tragenden Struktur zugeordnete Anschlagmittel aufgenommen ist. In diesem Hohlraum ist die Beschichtung angeordnet. Wird auf die Anschlagmittel eine Zugkraft aufgebracht, so richten sich die Anschlagmittel innerhalb der tragenden Strukturen aus, wobei die Beschichtung diese Ausrichtung der Anschlagmittel vereinfacht.

Gemäß einer weiteren Ausführungsform weisen die Anschlagmittel dem Fahrgestellrahmen abgewandt Anschlagabschnitte auf.

An diesen Anschlagabschnitten können weitere Anschlagmittel, die beispielsweise mit dem Luftfahrzeug, insbesondere mit einem Kran oder einer Winde des Luftfahrzeugs, verbunden werden können, angebracht werden. Die Anschlagabschnitte können beispielsweise eine ösenförmige oder ringförmige Geometrie aufweisen. Das heißt, dass die Anschlagmittel ösenförmig oder ringförmig sein können. Die Anschlagmittel des Luftfahrzeugs können beispielsweise mit Hilfe von Schäkeln oder Haken mit den Anschlagabschnitten der Anschlagmittel lösbar verbunden werden. Die Anschlagabschnitte der Anschlagmittel können klappbar oder umklappbar sein.

Gemäß einer weiteren Ausführungsform weist das Dach Aufnahmeabschnitte zum zumindest abschnittsweisen Aufnehmen der Anschlagabschnitte auf.

Die Aufnahmeabschnitte sind vorzugsweise kegelstumpfförmig oder trichterförmig. Die Aufnahmeabschnitte bilden bevorzugt Vertiefungen in dem Dach, in welchen die Anschlagabschnitte der Anschlagmittel zumindest abschnittsweise aufgenommen sein können. Beispielsweise können die Anschlagabschnitte umgeklappt und in den Aufnahmeabschnitten aufgenommen werden, wenn keine Verlastung des Fahrzeugs geplant ist. Hierdurch reduziert sich eine Höhe des Fahrzeugs.

Gemäß einer weiteren Ausführungsform sind die Anschlagmittel zumindest abschnittsweise flexibel, wobei die Anschlagmittel insbesondere zumindest abschnittsweise seilförmig, gurtförmig, kettenförmig oder biegestabförmig sind.

Dass die Anschlagmittel "zumindest abschnittsweise flexibel" sind, bedeutet vorliegend insbesondere, dass die Anschlagmittel auch zum Teil unflexibel sein können. Beispielsweise sind die Anschlagabschnitte der Anschlagmittel unflexibel. Zwischen den Anschlagmitteln und den Anbindungspunkten der Anschlagmittel an den Fahrgestellrahmen können die Anschlagmittel flexibel sein. Die Anschlagmittel können beispielsweise jeweils in Form eines Seils, insbesondere eines Drahtseils, oder einer Kette ausgebildet sein. Ferner können auch Gurte, insbesondere Textilgurte, als Anschlagmittel verwendet werden.

Gemäß einer weiteren Ausführungsform sind mit Hilfe der Anschlagmittel ausschließlich Zugkräfte übertragbar.

Das heißt insbesondere, dass die Anschlagmittel bei einem Aufbringen von Druckkräften ausweichen oder ausknicken.

Gemäß einer weiteren Ausführungsform weist der Fahrgestellrahmen Längsträger und senkrecht zu den Längsträgern angeordnete Querträger auf, wobei die Anschlagmittel mit den Längsträgern und/oder mit den Querträgern verbunden sind.

Dem Fahrzeug ist insbesondere ein Koordinatensystem mit einer ersten Raumrichtung, Längsrichtung oder x-Richtung, einer zweiten Raumrichtung, Querrichtung oder y-Richtung und einer dritten Raumrichtung, Hochrichtung oder z-Richtung zugeordnet. Die Richtungen sind senkrecht zueinander orientiert. Vorzugsweise erstrecken sich die Längsträger entlang der Längsrichtung. Die Querträger erstrecken sich bevorzugt senkrecht zu der Längsrichtung entlang der Querrichtung. Dabei können die Querträger mit den Längsträgern fest verbunden, insbesondere verschraubt und/oder verschweißt, sein. Durch den Aufbau des Fahrgestellrahmens mit den Längsträgern und Querträgern ergibt sich der zuvor erwähnte leiterartige Aufbau des Fahrgestellrahmens. Unter "senkrecht" ist vorliegend insbesondere ein Winkel von 90° ± 10°, bevorzugt von 90° ± 5°, weiter bevorzugt von 90° ± 3°, weiter bevorzugt von 90° ± 1°, weiter bevorzugt von genau 90°, zu verstehen.

Gemäß einer weiteren Ausführungsform weist das Fahrzeug Fahrgestellrahmen-Fahrzeugaufbau-Schnittstellen auf, mit deren Hilfe der Fahrgestellrahmen mit dem Fahrzeugaufbau verbunden ist.

Die Fahrgestellrahmen-Fahrzeugaufbau-Schnittstellen sind vorzugsweise lösbar. Beispielsweise sind die Fahrgestellrahmen-Fahrzeugaufbau-Schnittstellen Schraubverbindungen, die zwischen dem Fahrgestellrahmen und dem Fahrzeugaufbau vorgesehen sind. Hierdurch kann der Fahrgestellrahmen oder der Fahrzeugaufbau ausgetauscht werden. Die Fahrgestellrahmen-Fahrzeugaufbau-Schnittstellen sind an dem Fahrgestellrahmen und/oder an dem Fahrzeugaufbau vorgesehen. Die Anzahl der Fahrgestellrahmen-Fahrzeugaufbau-Schnittstellen ist beliebig. Besonders bevorzugt sind jedoch zumindest vier derartige Fahrgestellrahmen-Fahrzeugaufbau-Schnittstellen vorgesehen. Über die Fahrgestellrahmen-Fahrzeugaufbau-Schnittstellen erfolgt eine Krafteinleitung von dem Fahrzeugaufbau in den Fahrgestellrahmen und von dem Fahrgestellrahmen in den Fahrzeugaufbau.

Gemäß einer weiteren Ausführungsform sind die Fahrgestellrahmen-Fahrzeugaufbau-Schnittstellen zwischen Anbindungspunkten, an denen die Anschlagmittel mit dem Fahrgestellrahmen verbunden sind, angeordnet.

Insbesondere sind die Fahrgestellrahmen-Fahrzeugaufbau-Schnittstellen entlang der Längsrichtung betrachtet zwischen den Anbindungspunkten angeordnet. Die Anbindungspunkte können beispielsweise zwischen den Anschlagmitteln und dem Fahrgestellrahmen vorgesehene Schweißverbindungen oder Schraubverbindungen sein. Die Anzahl der Anbindungspunkte entspricht bevorzugt der Anzahl der Anschlagmittel. Beispielsweise sind vier Anschlagmittel und demgemäß auch vier Anbindungspunkte vorgesehen. Die Anbindungspunkte können an den Längsträgern und/oder an den Querträgern vorgesehen sein. Das kann insbesondere heißen, dass alle Anbindungspunkte an den Längsträgern vorgesehen sind, dass alle Anbindungspunkte an den Querträgern vorgesehen sind oder dass einige Anbindungspunkte an den Längsträgern und einige Anbindungspunkte an den Querträgern vorgesehen sind.

Gemäß einer weiteren Ausführungsform sind die Anschlagmittel von den tragenden Strukturen ausgehend schräg zu dem Fahrgestellrahmen hingeführt.

Insbesondere sind die tragenden Strukturen entlang der Querrichtung betrachtet relativ zu dem Fahrgestellrahmen nach außen versetzt. Das heißt insbesondere, dass der Fahrgestellrahmen entlang der Querrichtung betrachtet zwischen den tragenden Strukturen angeordnet ist. Der Fahrzeugaufbau ist somit entlang der Querrichtung betrachtet bevorzugt breiter als der Fahrgestellrahmen. Um die Anschlagmittel von den tragenden Strukturen hin zu dem Fahrgestellrahmen zu führen, werden die Anschlagmittel schräg orientiert. Die Anschlagmittel können dabei entlang der Längsrichtung, entlang der Querrichtung und/oder der Hochrichtung betrachtet schräg angeordnet sein. Es ist somit eine beliebige Orientierung der Anschlagmittel im Raum möglich.

Gemäß einer weiteren Ausführungsform weist das Fahrzeug Umlenkelemente zum Umlenken der Anschlagmittel auf.

Die Umlenkelemente sind insbesondere an dem Fahrzeugaufbau montiert. Die Umlenkelemente können dazu geeignet sein, die Anschlagmittel von den Seitenwänden oder den tragenden Strukturen weg hin zu dem Fahrgestellrahmen, insbesondere hin zu den Anbindungspunkten, umzulenken. Die Umlenkelemente können beispielsweise drehbar gelagerte Rollen sein. Alternativ können die Umlenkelemente auch Rohre oder Zylinder sein, über welche die Anschlagmittel gleiten können. Jedem Anschlagmittel kann ein derartiges Umlenkelement zugeordnet sein. Dies ist jedoch nicht zwingend erforderlich.

Gemäß einer weiteren Ausführungsform weist das Fahrzeug Kraftübertragungselemente auf, mit deren Hilfe die Anschlagmittel mit dem Fahrgestellrahmen verbunden sind, wobei sich die Kraftübertragungselemente ausgehend von dem Fahrgestellrahmen nach außen in Richtung der tragenden Strukturen erstrecken.

Die Kraftübertragungselemente überbrücken insbesondere einen Abstand zwischen den tragenden Strukturen und dem Fahrgestellrahmen. Die Kraftübertragungselemente können an den Anbindungspunkten mit dem Fahrgestellrahmen verbunden sein. In diesem Fall können die Anbindungspunkte beispielsweise Schraubverbindungen und/oder Schweißverbindungen sein. Die Kraftübertragungselement können beispielsweise als T-Träger ausgeführt sein. Alternativ können die Kraftübertragungselemente auch als gebogene Rundstäbe, die sich ausgehend von dem Fahrgestellrahmen nach außen in Richtung der tragenden Strukturen krümmen, ausgebildet sein. Beispielsweise sind die Kraftübertragungselemente aus einem Rundstahl gefertigt. Die Kraftübertragungselemente können jedoch auch rohrförmig sein.

Gemäß einer weiteren Ausführungsform verkleinert sich eine jeweilige Querschnittsfläche der Kraftübertragungselemente ausgehend von dem Fahrgestellrahmen nach außen in Richtung der tragenden Strukturen.

In diesem Fall sind die Kraftübertragungselemente vorzugsweise als T-Träger ausgebildet. Die Kraftübertragungselemente verjüngen sich ausgehend von dem Fahrgestellrahmen nach außen in Richtung der Seitenwände oder in Richtung der tragenden Strukturen. Dabei verringert sich die Querschnittsfläche der Kraftübertragungselemente. Mit anderen Worten wird die Querschnittsfläche der Kraftübertragungselemente geringer oder kleiner, je näher diese den Anschlagmitteln kommen. Unter einem "Verjüngen" ist dabei insbesondere zu verstehen, dass eine entlang der Hochrichtung betrachtet Höhe der Kraftübertragungselemente ausgehend von dem Fahrgestellrahmen in Richtung der tragenden Strukturen kleiner wird oder abnimmt.

Gemäß einer weiteren Ausführungsform weist das Fahrzeug rohrförmige Führungselemente zum Führen der Anschlagmittel von den tragenden Strukturen ausgehend hin zu dem Fahrgestellrahmen auf, wobei die Anschlagmittel zumindest abschnittsweise innerhalb der Führungselemente angeordnet sind.

Die Führungselemente sind rohrförmig und können daher auch als Führungsrohre bezeichnet werden. Jedem Anschlagmittel kann ein derartiges Führungselement zugeordnet sein. Die Führungselemente führen die Anschlagmittel von den tragenden Strukturen in Richtung der Anbindungspunkte. Die Anschlagmittel sind dabei mit den Anbindungspunkten verbunden. Die Anschlagmittel sind durch die Führungselemente hindurchgeführt. Die Führungselemente können schräg zu der Längsrichtung, der Querrichtung und/oder der Hochrichtung angeordnet sein.

"Ein" ist vorliegend nicht zwingend als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine Beschränkung auf genau die genannte Anzahl von Elementen gegeben ist. Vielmehr sind zahlenmäßige Abweichungen nach oben und unten möglich, soweit nichts Gegenteiliges angegeben ist.

Weitere mögliche Implementierungen des Fahrzeugs umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Fahrzeugs hinzufügen.

Weitere vorteilhafte Ausgestaltungen und Aspekte des Fahrzeugs sind Gegenstand der Unteransprüche sowie der im Folgenden beschriebenen Ausführungsbeispiele des Fahrzeugs. Im Weiteren wird das Fahrzeug anhand von bevorzugten Ausführungsformen unter Bezugnahme auf die beigelegten Figuren näher erläutert.
- Fig. 1: zeigt eine schematische Seitenansicht einer Ausführungsform eines Fahrzeugs;
- Fig. 2: zeigt eine schematische Aufsicht des Fahrzeugs gemäß Fig. 1;
- Fig. 3: zeigt eine schematische Vorderansicht des Fahrzeugs gemäß Fig. 1;
- Fig. 4: zeigt eine schematische Schnittansicht einer Ausführungsform eines Anschlagsystems für das Fahrzeug gemäß Fig. 1;
- Fig. 5: zeigt eine schematische Vorderansicht einer weiteren Ausführungsform eines Fahrzeugs;
- Fig. 6: zeigt eine schematische Vorderansicht einer weiteren Ausführungsform eines Fahrzeugs; und
- Fig. 7: zeigt eine schematische Vorderansicht einer weiteren Ausführungsform eines Fahrzeugs.

In den Figuren sind gleiche oder funktionsgleiche Elemente mit denselben Bezugszeichen versehen worden, sofern nichts anderes angegeben ist.

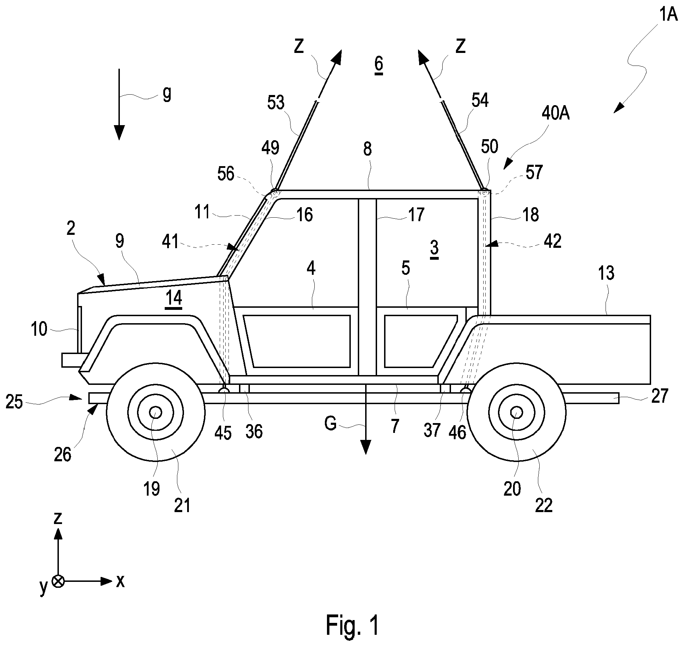

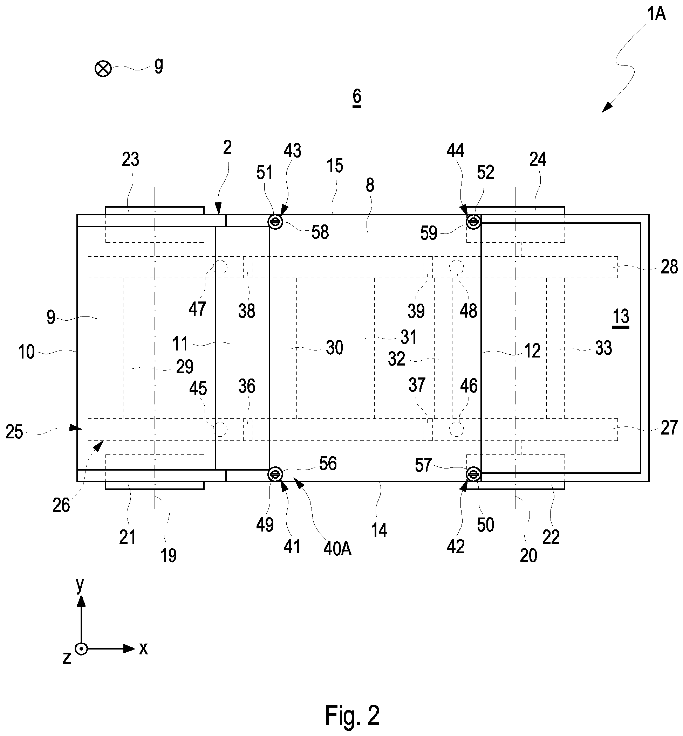

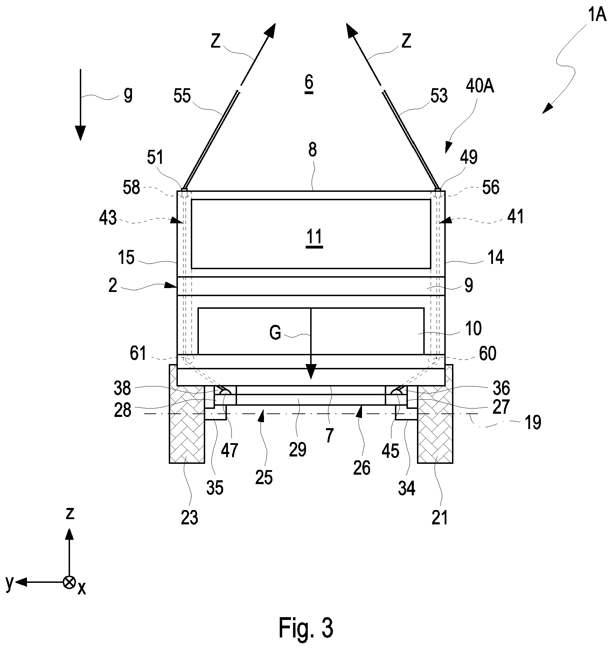

Die Fig. 1 zeigt eine schematische Seitenansicht einer Ausführungsform eines Fahrzeugs 1A. Die Fig. 2 zeigt eine schematische Aufsicht des Fahrzeugs 1A. Die Fig. 3 zeigt eine schematische Vorderansicht des Fahrzeugs 1A. Im Folgenden wird auf die Fig. 1 bis 3 gleichzeitig Bezug genommen.

Dem Fahrzeug 1A ist ein Koordinatensystem mit einer ersten Raumrichtung, Längsrichtung oder x-Richtung x, einer zweiten Raumrichtung, Querrichtung oder y-Richtung y oder einer dritten Raumrichtung, Hochrichtung oder z-Richtung z zugeordnet. Die Richtungen x, y, z sind senkrecht zueinander orientiert. Eine Schwerkraftrichtung g kann im Wesentlichen entgegen der z-Richtung z orientiert sein. Eine Gewichtskraft G des Fahrzeugs 1A wirkt entlang der Schwerkraftrichtung g.

Das Fahrzeug 1A kann ein militärisches Fahrzeug, insbesondere ein Luftlandefahrzeug, sein. Das Fahrzeug 1A kann daher auch als Militärfahrzeug bezeichnet werden. Das Fahrzeug 1A kann ein Personenkraftwagen oder ein Nutzfahrzeug sein. Das Fahrzeug 1A ist ein chassisbasiertes Fahrzeug und kann daher auch als solches bezeichnet werden. Das Fahrzeug 1A kann ferner auch als Luftlandefahrzeug bezeichnet werden. Unter einem "Luftlandefahrzeug " ist vorliegend ein Fahrzeug zu verstehen, welches mit Hilfe eines Luftfahrzeugs, beispielsweise mit Hilfe eines Helikopters, verlastet werden kann. Dabei wird das Fahrzeug 1A insbesondere als Außenlast des Luftfahrzeugs verlastet. Das Fahrzeug 1A kann bewaffnet oder unbewaffnet sein.

Das Fahrzeug 1A umfasst einen Fahrzeugaufbau 2. Der Fahrzeugaufbau 2 kann auch als Karosserie oder als Fahrzeugzelle bezeichnet werden. Die Begriffe "Fahrzeugaufbau", "Karosserie" und "Fahrzeugzelle" sind daher beliebig gegeneinander tauschbar. Der Fahrzeugaufbau 2 kann gepanzert sein. In diesem Fall ist der Fahrzeugaufbau 2 insbesondere gegen Beschuss, Sprengfallen, unkonventionelle Spreng- oder Brandvorrichtungen (USBV, engl.: Improvised Explosive Devices, IED), Minen oder dergleichen geschützt. Dies ist jedoch nicht zwingend erforderlich. Im Folgenden wird davon ausgegangen, dass der Fahrzeugaufbau 2 nicht geschützt ist.

Der Fahrzeugaufbau 2 kann skelettartig aufgebaut sein. Der Fahrzeugaufbau 2 umschließt oder umgrenzt einen Fahrzeuginnenraum oder Innenraum 3, in dem sich eine Besatzung des Fahrzeugs 1A aufhalten kann. Für die Besatzung können in dem Innenraum 3 Sitze (nicht gezeigt) montiert sein. Der Innenraum 3 kann beispielsweise über Türen 4, 5 von einer Umgebung 6 des Fahrzeugs 1A her zugänglich sein.

Der Fahrzeugaufbau 2 weist einen Boden 7 und ein dem Boden 7 abgewandtes Dach 8 auf. Ferner umfasst der Fahrzeugaufbau 2 eine Motorhaube 9, einen Kühlergrill 10, eine Windschutzscheibe oder Frontscheibe 11, eine Rückwand 12 sowie eine Ladefläche 13. Ferner umfasst der Fahrzeugaufbau 2 zwei Seitenwände 14, 15, an denen die Türen 4, 5 verschwenkbar angeschlagen sein können. Die Seitenwände 14, 15 sind vorzugsweise fachwerkartig oder skelettförmig. Die Seitenwände 14, 15 sind somit nicht geschlossen, sondern offen. Die Frontscheibe 11 ist optional. Für den Fall, dass eine Frontscheibe 11 vorhanden ist, kann diese in der Orientierung der Fig. 1 nach vorne auf die Motorhaube 9 heruntergeklappt werden. Zumindest die Frontscheibe 11 kann geschützt sein.

Der Fahrzeugaufbau 2 weist tragende Strukturen 16, 17, 18 auf, welche den Boden 7 mit dem Dach 8 verbinden. Die tragenden Strukturen 16, 17, 18 sind tragende Fahrzeugsäulen und können daher auch als solche bezeichnet werden. Demgemäß können vorliegend die Begriffe "tragende Struktur" und "tragende Fahrzeugsäule" beliebig gegeneinander getauscht werden. "Tragend" heißt im vorliegenden Fall, dass mit Hilfe der tragenden Strukturen 16, 17, 18 Kräfte von dem Boden 7 auf das Dach 8 oder umgekehrt übertragen werden können. Der Boden 7 und das Dach 8 sind fest mit den tragenden Strukturen 16, 17, 18 verbunden. Beispielsweise sind der Boden 7 und das Dach 8 mit den tragenden Strukturen 16, 17, 18 verschraubt, vernietet und/oder verschweißt.

Vorzugsweise sind vier oder sechs tragende Strukturen 16, 17, 18 vorgesehen, die jeweils paarweise einander gegenüberliegend an den Seitenwänden 14, 15 platziert sind. Es kann ein Paar an ersten tragenden Strukturen 16, ein Paar an zweiten tragenden Strukturen 17 und ein Paar an dritten tragenden Strukturen 18 vorgesehen sein. Die ersten tragenden Strukturen 16 können auch als A-Säulen bezeichnet werden. Die zweiten tragenden Strukturen 17 können auch als B-Säulen bezeichnet werden. Die dritten tragenden Strukturen 18 können auch als C-Säulen bezeichnet werden. Die tragenden Strukturen 16, 17, 18 sind hohl. Beispielsweise sind die tragenden Strukturen 16, 17, 18 rohrförmig. Die tragenden Strukturen 16, 17, 18 können dabei einen beliebigen Querschnitt, beispielsweise einen kreisrunden oder einen rechteckförmigen Querschnitt, aufweisen. Die tragenden Strukturen 16, 17, 18 können Rohre oder Rechteckträger sein.

Das Fahrzeug 1A kann ein Radfahrzeug oder ein Kettenfahrzeug sein. Nachfolgend wird jedoch davon ausgegangen, dass das Fahrzeug 1A ein Radfahrzeug ist. Das Fahrzeug 1A umfasst mehrere Radachsen 19, 20, an denen Räder 21, 22, 23, 24 angebracht sind. Beispielsweise sind zwei Radachsen 19, 20 mit vier Rädern 21, 22, 23, 24 vorgesehen. Insbesondere ist eine Vorderachse oder erste Radachse 19 und eine Hinterachse oder zweite Radachse 20 vorgesehen. Es können jedoch auch mehr als zwei Radachsen 19, 20 vorgesehen sein. Jeder Radachse 19, 20 sind zwei Räder 21, 22, 23, 24 zugeordnet. Zumindest die Räder 21, 23 sind lenkbar. Es können jedoch auch alle Räder 21, 22, 23, 24 lenkbar sein. Vorzugsweise umfasst das Fahrzeug 1A einen Allradantrieb. Das heißt, alle Radachsen 19, 20 sind angetrieben.

Die Radachsen 19, 20 sowie die Räder 21, 22, 23, 24 sind Teile eines Chassis oder Fahrgestells 25 des Fahrzeugs 1A. Das Fahrgestell 25 umfasst einen Fahrgestellrahmen 26, der sich entlang der x-Richtung x erstreckt. Der Fahrgestellrahmen 26 ist ein Leiterrahmen. Vorliegend können daher die Begriffe "Fahrgestellrahmen" und "Leiterrahmen" beliebig gegeneinander getauscht werden.

Der Fahrgestellrahmen 26 umfasst zwei entlang der x-Richtung x verlaufende und entlang der y-Richtung y voneinander beabstandet angeordnete Längsträger 27, 28. Die Längsträger 27, 28 können beispielsweise Rechteckprofile oder Rohre sein. Beispielsweise können die Längsträger 27, 28 aus einer Stahllegierung oder aus einer Aluminiumlegierung gefertigt sein. Senkrecht zu den Längsträgern 27, 28 sind mehrere Querträger 29, 30, 31, 32, 33 angeordnet. Die Querträger 29, 30, 31, 32, 33 verlaufen somit entlang der y-Richtung y. Die Anzahl der Querträger 29, 30, 31, 32, 33 ist beliebig. Die Querträger 29, 30, 31, 32, 33 sind fest mit den Längsträgern 27, 28 verbunden. Beispielsweise sind die Querträger 29, 30, 31, 32, 33 mit den Längsträgern 27, 28 verschraubt, vernietet und/oder verschweißt. Mit Hilfe der entlang der x-Richtung x verlaufenden Längsträger 27, 28 und der entlang der y-Richtung y verlaufenden Querträger 29, 30, 31, 32, 33 ergibt sich der leiterförmige Aufbau des Fahrgestellrahmens 26.

Neben dem Fahrgestellrahmen 26 umfasst das Fahrgestell 25 mehrere Radaufhängungen 34, 35 (Fig. 3), wobei jedem Rad 21, 22, 23, 24 eine derartige Radaufhängung 34, 35 zugeordnet ist. Das heißt insbesondere, dass vier derartige Radaufhängungen 34, 35 vorgesehen sind. Die Radaufhängungen 34, 35 können beispielsweise als Einzelradaufhängungen für die Räder 21, 22, 23, 24 ausgeführt sein. Beispielsweise weist eine derartige Radaufhängung 34, 35 jeweils einen unteren Querlenker, einen oberen Querlenker sowie einen Achsschenkel auf. Die Radaufhängungen 34, 35 können ferner Federn, Dämpfer, Stabilisatoren oder dergleichen aufweisen.

Der Fahrzeugaufbau 2 wird von dem Fahrgestell 25, insbesondere von dem Fahrgestellrahmen 26, getragen. Das heißt insbesondere, dass das Fahrgestell 25 eine Gewichtskraft des Fahrzeugaufbaus 2 aufnimmt. Der Fahrzeugaufbau 2 ist von dem Fahrgestell 25 trennbar. Beispielsweise ist der Fahrzeugaufbau 2 mit dem Fahrgestell 25, insbesondere mit dem Fahrgestellrahmen 26, verschraubt. Das heißt insbesondere, dass der Fahrzeugaufbau 2 oder das Fahrgestell 25 ausgetauscht werden können.

Zum Verbinden des Fahrzeugaufbaus 2 mit dem Fahrgestell 25 oder mit dem Fahrgestellrahmen 26 sind mehrere Fahrgestellrahmen-Fahrzeugaufbau-Schnittstellen 36, 37, 38, 39 vorgesehen. Die Fahrgestellrahmen-Fahrzeugaufbau-Schnittstellen 36, 37, 38, 39 können beispielsweise als Verschraubungen ausgeführt sein, mit deren Hilfe der Fahrzeugaufbau 2, insbesondere der Boden 7 des Fahrzeugaufbaus 2, mit dem Fahrgestell 25 oder mit dem Fahrgestellrahmen 26 verbunden ist. Die Anzahl der Fahrgestellrahmen-Fahrzeugaufbau-Schnittstellen 36, 37, 38, 39 ist beliebig. Insbesondere sind jedoch zumindest vier derartige Fahrgestellrahmen-Fahrzeugaufbau-Schnittstellen 36, 37, 38, 39 vorgesehen.

Beispielsweise verbinden die Fahrgestellrahmen-Fahrzeugaufbau-Schnittstellen 36, 37, 38, 39 die Längsträger 27, 28 mit dem Fahrzeugaufbau 2, insbesondere mit dessen Boden 7. Die Fahrgestellrahmen-Fahrzeugaufbau-Schnittstellen 36, 38 und die Fahrgestellrahmen-Fahrzeugaufbau-Schnittstellen 37, 39 sind entlang der x-Richtung x betrachtet voneinander beabstandet angeordnet. Ferner sind die Fahrgestellrahmen-Fahrzeugaufbau-Schnittstellen 36, 37 und die Fahrgestellrahmen-Fahrzeugaufbau-Schnittstellen 38, 39 entlang der y-Richtung y voneinander beabstandet platziert.

Zum Verlasten unter einem Luftfahrzeug können an dem Fahrzeug 1A geeignete Anschlagmittel, wie beispielsweise Gurte oder Ketten, angeschlagen werden. Die Anschlagmittel können gemäß betriebsinternen Kenntnissen beispielsweise an dem Dach 8 oder dem Dach 8 nahen Bauteilen befestigt werden. Dazu kann das Fahrzeug 1A an dem Dach 8 mit entsprechenden Ösen ausgestattet werden. Wird nun auf die Anschlagmittel eine Zugkraft aufgebracht, wird das Fahrzeug 1A an dem Fahrzeugaufbau 2 nach oben gezogen.

Dadurch wird das Fahrgestell 25 von dem Fahrzeugaufbau 2 her in die Höhe gezogen. Das Fahrgestell 25 hängt dann nur über die Fahrgestellrahmen-Fahrzeugaufbau-Schnittstellen 36, 37, 38, 39 an dem Fahrzeugaufbau 2, wodurch die Fahrgestellrahmen-Fahrzeugaufbau-Schnittstellen 36, 37, 38, 39 mechanisch belastet werden. Diese Belastungen sind nur schwer mit den üblichen Lastkollektiven für derartige Fahrgestellrahmen-Fahrzeugaufbau-Schnittstellen 36, 37, 38, 39 zwischen dem Fahrzeugaufbau 2 und dem Fahrgestell 25 vereinbar. Es ist daher wünschenswert, die Fahrgestellrahmen-Fahrzeugaufbau-Schnittstellen 36, 37, 38, 39 mechanisch zu entlasten.

Bei einer Befestigung der Anschlagmittel direkt an dem Fahrgestell 25 ergäbe sich die Problematik, die Anschlagmittel dann aufwändig an den Seitenwänden 14, 15 des Fahrzeugaufbaus 2 entlang nach oben in Richtung des Luftfahrzeugs zu führen, um bei Bewegungen des Fahrzeugs 1A während des Verlastens desselben ein Durchscheuern der Anschlagmittel an den Seitenwänden 14, 15 und Kanten, wie beispielsweise Dachkanten, zu vermeiden. Hierzu könnten Schienen, Ösen oder Rollen zum Einsatz kommen, um die Anschlagmittel nach oben zu führen. Diese zusätzlichen Bauteile hätten jedoch einen negativen Einfluss auf eine Gewichtsbilanz und eine Fahrzeugbreite des Fahrzeugs 1A. Ferner wäre es auch grundsätzlich möglich, die Anschlagmittel über Ösen an einem Heck und einer Front des Fahrzeugs 1A zu befestigen.

Die vorgenannten Lösungsansätze erfordern jedoch, dass entweder bei dem Anbringen der Anschlagmittel direkt an dem Fahrgestell 25 eine wie oben beschriebene Führung der Anschlagmittel außen entlang des Fahrzeugaufbaus 2 notwendig wird oder bei dem Anbringen der Anschlagmittel an dem Dach 8 eine sehr hohe Belastung der Fahrgestellrahmen-Fahrzeugaufbau-Schnittstellen 36, 37, 38, 39 stattfindet. Gegebenenfalls notwendige Führungshilfen für die Anschlagmittel an den Seitenwänden 14, 15 des Fahrzeugsaufbaus 2 führen zu einem größeren Fahrzeuggewicht und zu einer größeren Fahrzeugbreite. Dies stellt ein Risiko für die Zulassungsfähigkeit des Fahrzeugs 1A dar. Dies gilt es zu verbessern.

Um das Fahrzeug 1A mit Hilfe eines wie zuvor erwähnten Luftfahrzeugs ohne die zuvor erwähnten Nachteile verlasten zu können, weist das Fahrzeug 1A ein Anschlagsystem 40A auf. Das Anschlagsystem 40A weist mehrere Anschlagmittel 41, 42, 43, 44 auf, welche fest mit dem Fahrgestellrahmen 26 verbunden sind. Unter einem "Anschlagmittel" ist vorliegend ein Bauteil zu verstehen, das nicht zu einem Hebezeug, wie beispielsweise einer Winde oder einem Kran des Luftfahrzeugs, gehört und das eine Verbindung zwischen dem Hebezeug und einer Last, vorliegend dem Fahrzeug 1A, ermöglicht. Die Anschlagmittel 41, 42, 43, 44 sind verformbar oder verbiegbar. Die Anschlagmittel 41, 42, 43, 44 können Seile oder Ketten sein. Die tragenden Strukturen 16, 17, 18 können Teil des Anschlagsystems 40A sein. Dies ist jedoch nicht zwingend erforderlich.

Die Anschlagmittel 41, 42, 43, 44 sind von dem Dach 8 durch die tragenden Strukturen 16, 18 hindurch hin zu dem Fahrgestell 25, insbesondere zu dem Fahrgestellrahmen 26, geführt. Alternativ können die Anschlagmittel 41, 42, 43, 44 auch durch die tragenden Strukturen 16, 17 oder durch die tragenden Strukturen 17, 18 von dem Dach 8 durch die tragenden Strukturen 16, 18 hindurch hin zu dem Fahrgestell 25, insbesondere zu dem Fahrgestellrahmen 26, geführt sein. Es können auch durch alle tragenden Strukturen 16, 17, 18 derartige Anschlagmittel 41, 42, 43, 44 von dem Dach 8 hin zu dem Fahrgestell 25, insbesondere zu dem Fahrgestellrahmen 26, geführt sein. Auf ihrem Weg von dem Dach 8 hin zu dem Fahrgestellrahmen 26 können die Anschlagmittel 41, 42, 43, 44 mehrfach umgelenkt werden.

Die Anzahl der Anschlagmittel 41, 42, 43, 44 ist beliebig. Insbesondere sind jedoch zumindest vier derartige Anschlagmittel 41, 42, 43, 44 vorgesehen. Im vorliegenden Fall weist das Anschlagsystem 40A genau vier derartige Anschlagmittel 41, 42, 43, 44 auf, welche an Anbindungspunkten 45, 46, 47, 48 mit dem Fahrgestellrahmen 26, insbesondere mit den Längsträgern 27, 28, verbunden sind. Die Anbindungspunkte 45, 46, 47, 48 können beispielsweise Schweißverbindungen oder Schraubverbindungen sein. Beispielsweise sind genau vier Anbindungspunkte 45, 46, 47, 48 vorgesehen.

Die Anbindungspunkte 45, 46, 47, 48 können Teil des Fahrgestellrahmens 26, insbesondere der Längsträger 27, 28, sein. Jedem Längsträger 27, 28 sind zwei Anbindungspunkte 45, 46, 47, 48 zugeordnet. Entlang der x-Richtung x betrachtet können die Fahrgestellrahmen-Fahrzeugaufbau-Schnittstellen 36, 37, 38, 39 zwischen den Anbindungspunkten 45, 46, 47, 48 platziert sein. Dies ist jedoch nicht zwingend erforderlich. Entlang der z-Richtung z betrachtet können die Fahrgestellrahmen-Fahrzeugaufbau-Schnittstellen 36, 37, 38, 39 und die Anbindungspunkte 45, 46, 47, 48 auch übereinander angeordnet sein.

Die Anschlagmittel 41, 42, 43, 44 sind vorzugsweise als Seile, insbesondere als Drahtseile, ausgeführt. Alternativ können die Anschlagmittel 41, 42, 43, 44 auch als Ketten oder Gurte, insbesondere Textilgurte, ausgeführt sein. Außerdem können die Anschlagmittel 41, 42, 43, 44 auch als Biegestäbe ausgeführt sein. Unter einem "Biegestab" ist vorliegend ein stabförmiges Bauteil zu verstehen, welches durch das Aufbringen einer Kraft elastisch verformt werden kann.

Die Anzahl der Anbindungspunkte 45, 46, 47, 48 entspricht der Anzahl der Anschlagmittel 41, 42, 43, 44. Das heißt insbesondere, dass vier Anbindungspunkte 45, 46, 47, 48 vorgesehen sind. Die Anbindungspunkte 45, 46, 47, 48 können beispielsweise an dem Fahrgestellrahmen 26 angebrachte Bauelemente, beispielsweise in der Form von Ösen oder Schlaufen, sein oder aufweisen, in welche die Anschlagmittel 41, 42, 43, 44 eingehängt werden können, um die Anschlagmittel 41, 42, 43, 44 an den Anbindungspunkten 45, 46, 47, 48 mit dem Fahrgestell 25, insbesondere mit dem Fahrgestellrahmen 26, zu verbinden.

Wie zuvor erwähnt, sind die Anschlagmittel 41, 42, 43, 44 an den Anbindungspunkten 45, 46, 47, 48 bevorzugt fest mit dem Fahrgestellrahmen 26 verbunden. Dem Fahrgestellrahmen 26 abgewandt weist jedes Anschlagmittel 41, 42, 43, 44 einen ösenförmigen Anschlagabschnitt 49, 50, 51, 52 auf. An den Anschlagabschnitten 49, 50, 51, 52 können beispielsweise mit Hilfe eines Schäkels oder eines Hakens weitere Anschlagmittel 53, 54, 55 angebracht werden, welche mit dem Luftfahrzeug, insbesondere mit dessen Winde, verbunden werden. Es sind vier Anschlagmittel 53, 54, 55 vorgesehen, von denen in den Fig. 1 und 3 jedoch nur drei gezeigt sind. Die Anschlagmittel 53, 54, 55 können grundsätzlich Teil des Anschlagsystems 40A sein. Die Anschlagmittel 53, 54, 55 sind vorliegend jedoch bevorzugt nicht Teil des Anschlagsystems 40A.

Jedem Anschlagabschnitt 49, 50, 51, 52 kann an dem Dach 8 ein trichterförmiger Aufnahmeabschnitt 56, 57, 58, 59 zugeordnet sein. Die Aufnahmeabschnitte 56, 57, 58, 59 können kegelstumpfförmig oder konusförmig sein und bilden an dem Dach 8 Vertiefungen, in welchen die Anschlagabschnitte 49, 50, 51, 52 zumindest abschnittsweise aufgenommen sein können. Beispielsweise können die Anschlagabschnitte 49, 50, 51, 52 in die Aufnahmeabschnitte 56, 57, 58, 59 hineingeklappt werden, so dass diese nicht über das Dach 8 überstehen.

Wie zuvor erwähnt, sind die Anschlagmittel 41, 42, 43, 44 durch die tragenden Strukturen 16, 17, 18 von dem Dach 8 zu den an dem Fahrgestellrahmen 26 vorgesehenen Anbindungspunkten 45, 46, 47, 48 hingeführt. Dabei kann es erforderlich sein, die Anschlagmittel 41, 42, 43, 44 zumindest einmal oder auch mehrmals umzulenken. Für dieses Umlenken können Umlenkelemente 60, 61 (Fig. 3) vorgesehen sein, die beispielsweise dazu geeignet sind, die Anschlagmittel 41, 42, 43, 44 von den Seitenwänden 14, 15 weg hin zu dem Fahrgestellrahmen 26, insbesondere zu den Anbindungspunkten 45, 46, 47, 48, umzulenken. Die Umlenkelemente 60, 61 können beispielsweise drehbar gelagerte Rollen sein. Alternativ können die Umlenkelemente 60, 61 auch Rohre oder Zylinder sein, über welche die Anschlagmittel 41, 42, 43, 44 gleiten können.

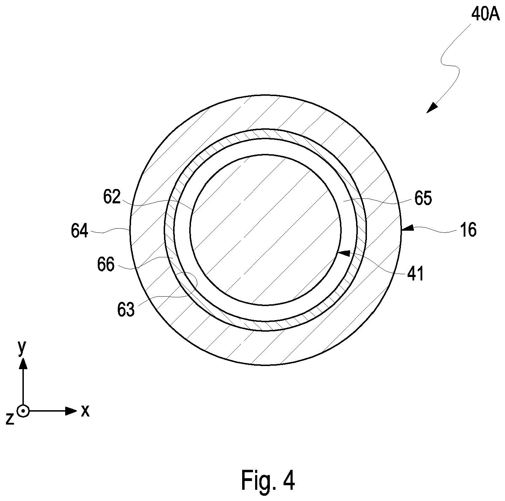

Die Fig. 4 zeigt eine schematische Schnittansicht einer Ausführungsform eines wie zuvor erwähnten Anschlagsystems 40A.

Insbesondere zeigt die Fig. 4 eine Schnittansicht des Anschlagmittels 41 sowie der dem Anschlagmittel 41 zugeordneten ersten tragenden Struktur 16. Das Anschlagmittel 41 ist in diesem Fall beispielsweise ein Drahtseil. Die erste tragende Struktur 16 kann ein Rohr mit kreisförmigem Querschnitt sein. Das Anschlagmittel 41 umfasst eine Außenseite 62, die einer Innenseite 63 der ersten tragenden Struktur 16 zugewandt ist. Der Innenseite 63 abgewandt weist die erste tragende Struktur 16 eine Außenseite 64 auf.

Die erste tragende Struktur 16 umschließt somit einen Hohlraum 65, in dem das Anschlagmittel 41 angeordnet oder aufgenommen ist. In dem Hohlraum 65 kann sich das Anschlagmittel 41 relativ zu der ersten tragenden Struktur 16 bewegen. In dem Hohlraum 65 kann eine optionale Beschichtung 66 vorgesehen sein. Die Beschichtung 66 erleichtert ein Gleiten des Anschlagmittels 41 relativ zu der ersten tragenden Struktur 16, da die Beschichtung 66 die Reibung zwischen der Außenseite 62 des Anschlagmittels 41 und der Innenseite 63 der ersten tragenden Struktur 16 reduziert.

Die Beschichtung 66 kann auf die Innenseite 63 der ersten tragenden Struktur 16 aufgebracht sein. Alternativ kann die Beschichtung 66 auch auf der Außenseite 62 des Anschlagmittels 41 aufgebracht sein. Beispielsweise kann die Beschichtung 66 ein Gleitmittel enthalten. Insbesondere kann die Beschichtung 66 eine Kupferpaste sein oder aufweisen. Die Beschichtung 66 kann ferner auch Grafit umfassen. Die Beschichtung 66 kann jedoch auch eine Kunststoffbeschichtung sein. Beispielsweise kann die Beschichtung 66 als Polytetrafluorethylen-Beschichtung (PTFE-Beschichtung) auf die Innenseite 63 der ersten tragenden Struktur 16 oder auf die Außenseite 62 des Anschlagmittels 41 aufgebracht sein.

Die Funktionalität des Anschlagsystems 40A wird nachfolgend erläutert. Die Anschlagmittel 53, 54, 55, die beispielsweise bereits mit der Winde des Luftfahrzeugs verbunden sein können, werden mit den Anschlagabschnitten 49, 50, 51, 52 der Anschlagmittel 41, 42, 43, 44 verbunden. Dies kann beispielsweise mit Hilfe von Schäkeln oder Haken erfolgen.

Über die Anschlagmittel 53, 54, 55 wird nun eine Zugkraft Z auf das Anschlagsystem 40A, insbesondere auf die Anschlagmittel 41, 42, 43, 44, aufgebracht. Dies kann beispielsweise dadurch erfolgen, dass das Luftfahrzeug an Höhe gewinnt. Innerhalb der jeweiligen tragenden Strukturen 16, 17, 18 können sich die Anschlagmittel 41, 42, 43, 44 ausrichten, indem sich diese relativ zu den tragenden Strukturen 16, 17, 18 bewegen. Dies kann mit Hilfe der Beschichtung 66 erleichtert werden.

Das Fahrzeug 1A wird nun über die Anbindungspunkte 45, 46, 47, 48 an dem Fahrgestell 25, insbesondere an dem Fahrgestellrahmen 26, angehoben. Die Gewichtskraft G des Fahrzeugs 1A wird somit über die Anbindungspunkte 45, 46, 47, 48 auf die Anschlagmittel 41, 42, 43, 44 übertragen. Eine Belastung des Fahrzeugaufbaus 2 selbst bei dem Verlasten des Fahrzeugs 1A findet vorteilhafterweise nicht statt.

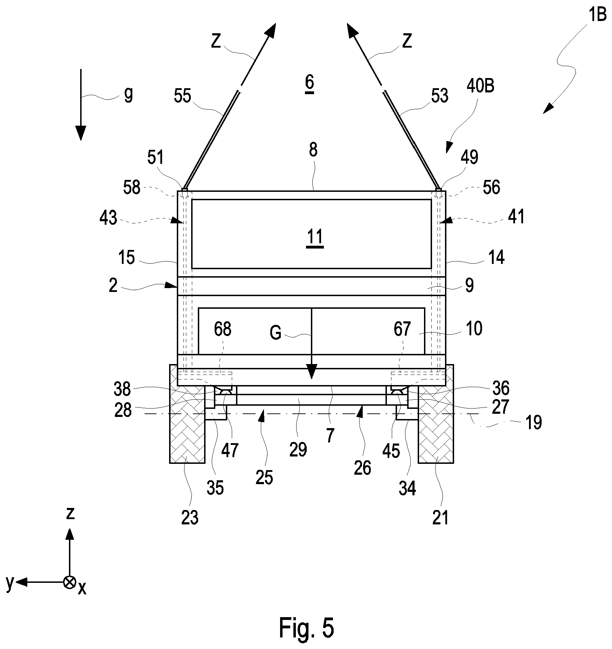

Die Fig. 5 zeigt eine schematische Vorderansicht einer weiteren Ausführungsform eines Fahrzeugs 1B.

Das Fahrzeug 1B entspricht von seinem Aufbau und seiner Funktion dem Aufbau und der Funktion des Fahrzeugs 1A. Das Fahrzeug 1B unterscheidet sich von dem Fahrzeug 1A nur dadurch, dass das Fahrzeug 1B eine weitere Ausführungsform eines wie zuvor erläuterten Anschlagsystems 40B aufweist. Das Anschlagsystem 40B unterscheidet sich von dem Anschlagsystem 40A wiederum nur dadurch, dass das Anschlagsystem 40B keine Umlenkelemente 60, 61 zum Umlenken der Anschlagmittel 41, 42, 43, 44, sondern Kraftübertragungselemente 67, 68 aufweist, an denen die Anschlagmittel 41, 42, 43, 44 befestigt sind.

Jedem Anschlagmittel 41, 42, 43, 44 ist ein eigenes Kraftübertragungselement 67, 68 zugeordnet. Die Kraftübertragungselemente 67, 68 überbrücken einen Abstand zwischen den tragenden Strukturen 16, 17, 18 und dem Fahrgestellrahmen 26. Die Kraftübertragungselemente 67, 68 können an den Anbindungspunkten 45, 46, 47, 48 mit dem Fahrgestellrahmen 26 verbunden sein. In diesem Fall können die Anbindungspunkte 45, 46, 47, 48 beispielsweise Schraubverbindungen und/oder Schweißverbindungen sein.

Die Kraftübertragungselemente 67, 68 können beispielsweise als T-Träger ausgeführt sein, die sich ausgehend von dem Fahrgestellrahmen 26 nach außen in Richtung der Seitenwände 14, 15 verjüngen. Unter einem "Verjüngen" ist dabei insbesondere zu verstehen, dass eine entlang der z-Richtung z betrachtete Höhe der Kraftübertragungselemente 67, 68 kleiner wird oder abnimmt.

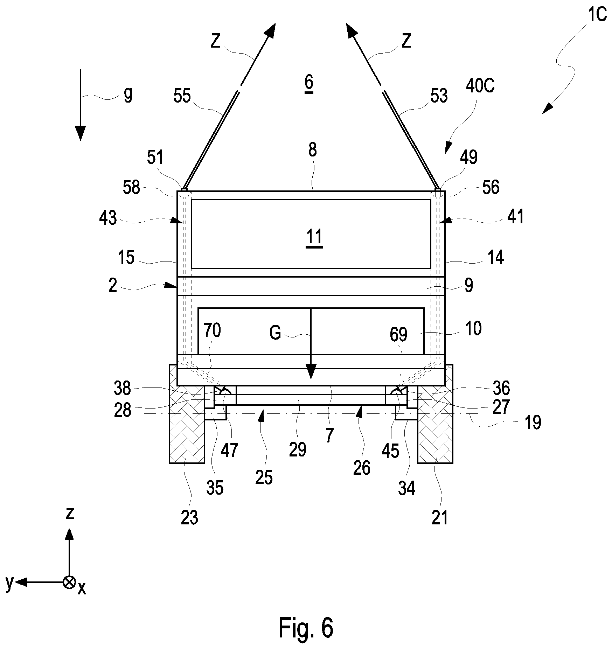

Die Fig. 6 zeigt eine schematische Vorderansicht einer weiteren Ausführungsform eines Fahrzeugs 1C.

Das Fahrzeug 1C entspricht von seinem Aufbau und seiner Funktion dem Aufbau und der Funktion des Fahrzeugs 1A. Das Fahrzeug 1C unterscheidet sich von dem Fahrzeug 1A nur dadurch, dass das Fahrzeug 1C eine weitere Ausführungsform eines wie zuvor erläuterten Anschlagsystems 40C aufweist. Das Anschlagsystem 40C unterscheidet sich von dem Anschlagsystem 40A wiederum nur dadurch, dass das Anschlagsystem 40C keine Umlenkelemente 60, 61 zum Umlenken der Anschlagmittel 41, 42, 43, 44, sondern Führungselemente 69, 70 aufweist, durch welche die Anschlagmittel 41, 42, 43, 44 hindurchgeführt sind.

Die Führungselemente 69, 70 sind rohrförmig und können daher auch als Führungsrohre bezeichnet werden. Jedem Anschlagmittel 41, 42, 43, 44 ist ein eigenes Führungselement 69, 70 zugeordnet. Die Führungselemente 69, 70 führen die Anschlagmittel 41, 42, 43, 44 von den tragenden Strukturen 16, 17, 18 in Richtung der Anbindungspunkte 45, 46, 47, 48. Die Anschlagmittel 41, 42, 43, 44 sind mit den Anbindungspunkten 45, 46, 47, 48 verbunden. Dabei sind die Anschlagmittel 41, 42, 43, 44 zumindest abschnittsweise innerhalb der Führungselemente 69, 70 angeordnet. Die Führungselemente 69, 70 können schräg zu der y-Richtung y und der z-Richtung z angeordnet sein. Zusätzlich können die Führungselemente 69, 70 auch schräg zu der x-Richtung x orientiert sein.

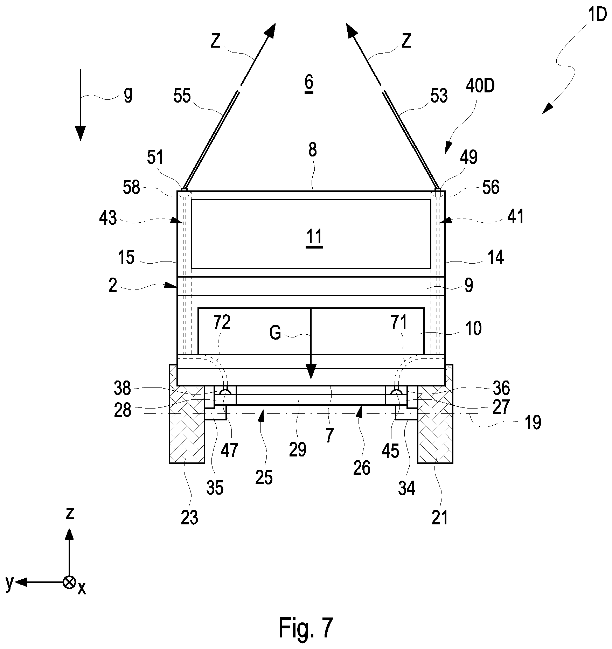

Die Fig. 7 zeigt eine schematische Vorderansicht einer weiteren Ausführungsform eines Fahrzeugs 1D.

Das Fahrzeug 1D entspricht von seinem Aufbau und seiner Funktion dem Aufbau und der Funktion des Fahrzeugs 1A. Das Fahrzeug 1D unterscheidet sich von dem Fahrzeug 1A nur dadurch, dass das Fahrzeug 1D eine weitere Ausführungsform eines wie zuvor erläuterten Anschlagsystems 40D aufweist. Das Anschlagsystem 40D unterscheidet sich von dem Anschlagsystem 40A wiederum nur dadurch, dass das Anschlagsystem 40D keine Umlenkelemente 60, 61 zum Umlenken der Anschlagmittel 41, 42, 43, 44, sondern Kraftübertragungselemente 71, 72 aufweist, an denen die Anschlagmittel 41, 42, 43, 44 befestigt sind.

Jedem Anschlagmittel 41, 42, 43, 44 ist ein eigenes Kraftübertragungselement 71, 72 zugeordnet. Die Kraftübertragungselemente 71, 72 überbrücken einen Abstand zwischen den tragenden Strukturen 16, 17, 18 und dem Fahrgestellrahmen 26. Die Kraftübertragungselemente 71, 72 können an den Anbindungspunkten 45, 46, 47, 48 mit dem Fahrgestellrahmen 26 verbunden sein. In diesem Fall können die Anbindungspunkte 45, 46, 47, 48 beispielsweise Schraubverbindungen und/oder Schweißverbindungen sein.

Im Gegensatz zu den zuvor erläuterten Kraftübertragungselementen 67, 68 sind die Kraftübertragungselemente 71, 72 jedoch nicht als T-Träger ausgeführt, sondern als gebogene Rundstäbe, die sich ausgehend von dem Fahrgestellrahmen 26 nach außen in Richtung der Seitenwände 14, 15 krümmen. Beispielsweise sind die Kraftübertragungselemente 71, 72 aus einem Rundstahl gefertigt. Die Kraftübertragungselemente 71, 72 können auch rohrförmig sein.

Die unterschiedlichen Ausführungsformen des Anschlagsystems 40A, 40B, 40C, 40D führen zu einer Entlastung der Fahrgestellrahmen-Fahrzeugaufbau-Schnittstellen 36, 37, 38, 39 zwischen dem Fahrzeugaufbau 2 und dem Fahrgestell 25 bei einem Verlasten des Fahrzeugs 1A, 1B, 1C, 1D unter einem Luftfahrzeug. Eine Beschädigung der Anschlagmittel 41, 42, 43, 44 oder des Fahrzeugs 1A, 1B, 1C, 1D durch Reibung zwischen den Anschlagmitteln 41, 42, 43, 44 und dem Fahrzeugsaufbau 2 wird zuverlässig verhindert. Es ergibt sich vorteilhafterweise eine Risikominimierung bei der Zulassung des Fahrzeugs 1A, 1B, 1C, 1D hinsichtlich zulässigen Gesamtgewichts und/oder Fahrzeugbreite.

Durch die Führung der fest montierten Anschlagmittel 41, 42, 43, 44 mit Hilfe der tragenden Strukturen 16, 17, 18 ist es möglich, die ungewollte Krafteinleitung in die Fahrgestellrahmen-Fahrzeugaufbau-Schnittstellen 36, 37, 38, 39 zu vermeiden. Das Fahrgestell 25 kann an Punkten, nämlich den Anbindungspunkten 45, 46, 47, 48, belastet werden, an denen ähnliche Krafteinleitungen oder Beanspruchungen, wie zum Beispiel bei einem Aufbocken des Fahrzeugs 1A, 1B, 1C, 1D, konstruktiv vorgesehen sind.

Das Schwingungs- oder Pendelverhalten des zu transportierenden Fahrzeugs 1A, 1B, 1C, 1D unter dem Luftfahrzeug wird vorteilhafterweise positiv beeinflusst. Da Führungen für Anschlagmittel an den Seitenwänden 14, 15 des Fahrzeugaufbaus 2 entfallen, kann Gewicht eingespart werden. Der zeitliche Aufwand bei dem Verlasten des zu transportierenden Fahrzeugs 1A, 1B, 1C, 1D nimmt ab.

Vorteilhafterweise sinkt der Entwicklungsaufwand inklusive des Verifikationsprogramms für die Fahrgestellrahmen-Fahrzeugaufbau-Schnittstellen 36, 37, 38, 39, weil die Zugbelastung zuzüglich der Schwingungskomponente bei der Auslegung entfällt und es bei der Auslegung der Fahrgestellrahmen-Fahrzeugaufbau-Schnittstellen 36, 37, 38, 39 bei einer üblichen Belastung bleibt. Für die Belastung können ausgelegte Bereiche des Fahrgestells 22, nämlich die Anbindungspunkte 45, 46, 47, 48, genutzt werden.

Es wird eine Beschädigung der Anschlagmittel 41, 42, 43, 44 durch Reibung vermieden. Gegebenenfalls notwendige seitliche Führungen für die Anschlagmittel 41, 42, 43, 44 an dem Fahrzeugaufbau 2 können vorteilhafterweise entfallen. Wie zuvor erwähnt, ergibt sich eine Gewichtsersparnis. Ferner ist eine Reduzierung der Fahrzeugbreite möglich oder es ist eine bessere Nutzung der maximal zulässigen Fahrzeugbreite möglich. Zulassungsrisiken werden reduziert. Es ergibt sich eine Zeitersparnis bei dem Verlasten des Fahrzeugs 1A, 1B, 1C, 1D. Das Pendelverhalten des Fahrzeugs 1A, 1B, 1C, 1D bei dem Verlasten desselben kann positiv beeinflusst werden. Für die Verlastung des Fahrzeugs 1A, 1B, 1C, 1D ist keine Zusatzausbildung für geschultes Ladepersonal notwendig. Das Anschlagsystem 40A, 40B, 40C, 40D ist wartungsarm und im Falle einer Beschädigung leicht zu reparieren.

Obwohl die vorliegende Erfindung anhand von Ausführungsbeispielen beschrieben wurde, ist sie vielfältig modifizierbar.

### BEZUGSZEICHENLISTE

- 1A: Fahrzeug
- 1B: Fahrzeug
- 1C: Fahrzeug
- 1D: Fahrzeug
- 2: Fahrzeugaufbau
- 3: Innenraum
- 4: Tür
- 5: Tür
- 6: Umgebung
- 7: Boden
- 8: Dach
- 9: Motorhaube
- 10: Kühlergrill
- 11: Frontscheibe
- 12: Rückwand
- 13: Ladefläche
- 14: Seitenwand
- 15: Seitenwand
- 16: Struktur
- 17: Struktur
- 18: Struktur
- 19: Radachse
- 20: Radachse
- 21: Rad
- 22: Rad
- 23: Rad
- 24: Rad
- 25: Fahrgestell
- 26: Fahrgestellrahmen
- 27: Längsträger
- 28: Längsträger
- 29: Querträger
- 30: Querträger
- 31: Querträger
- 32: Querträger
- 33: Querträger
- 34: Radaufhängung
- 35: Radaufhängung
- 36: Fahrgestellrahmen-Fahrzeugaufbau-Schnittstelle
- 37: Fahrgestellrahmen-Fahrzeugaufbau-Schnittstelle
- 38: Fahrgestellrahmen-Fahrzeugaufbau-Schnittstelle
- 39: Fahrgestellrahmen-Fahrzeugaufbau-Schnittstelle
- 40A: Anschlagsystem
- 40B: Anschlagsystem
- 40C: Anschlagsystem
- 40D: Anschlagsystem
- 41: Anschlagmittel
- 42: Anschlagmittel
- 43: Anschlagmittel
- 44: Anschlagmittel
- 45: Anbindungspunkt
- 46: Anbindungspunkt
- 47: Anbindungspunkt
- 48: Anbindungspunkt
- 49: Anschlagabschnitt
- 50: Anschlagabschnitt
- 51: Anschlagabschnitt
- 52: Anschlagabschnitt
- 53: Anschlagmittel
- 54: Anschlagmittel
- 55: Anschlagmittel
- 56: Aufnahmeabschnitt
- 57: Aufnahmeabschnitt
- 58: Aufnahmeabschnitt
- 59: Aufnahmeabschnitt
- 60: Umlenkelement
- 61: Umlenkelement
- 62: Außenseite
- 63: Innenseite
- 64: Außenseite
- 65: Hohlraum
- 66: Beschichtung
- 67: Kraftübertragungselement
- 68: Kraftübertragungselement
- 69: Führungselement
- 70: Führungselement
- 71: Kraftübertragungselement
- 72: Kraftübertragungselement

- g: Schwerkraftrichtung
- G: Gewichtskraft
- x: x-Richtung
- y: y-Richtung
- z: z-Richtung
- Z: Zugkraft

## Patentansprüche

1. Fahrzeug (1A, 1B, 1C, 1D) mit
einem Fahrgestellrahmen (26),
einem Fahrzeugaufbau (2), den der Fahrgestellrahmen (26) trägt, und
mehreren Anschlagmitteln (41, 42, 43, 44), die mit dem Fahrgestellrahmen (26) verbunden sind,
wobei der Fahrzeugaufbau (2) tragende Strukturen (16, 17, 18) und ein Dach (8) aufweist, und
**dadurch gekennzeichnet, dass**
die Anschlagmittel (41, 42, 43, 44) durch die tragenden Strukturen (16, 17, 18) hindurch von dem Fahrgestellrahmen (26) zu dem Dach (8) geführt sind.

2. Fahrzeug nach Anspruch 1,
**dadurch gekennzeichnet,**
**dass** die tragenden Strukturen (16, 17, 18) tragende Fahrzeugsäulen, insbesondere A-Säulen, B-Säulen und/oder C-Säulen, sind.

3. Fahrzeug nach Anspruch 1 oder 2,
**dadurch gekennzeichnet,**
**dass** die tragenden Strukturen (16, 17, 18) innenseitig und/oder die Anschlagmittel (41, 42, 43, 44) außenseitig mit einer reibungsreduzierenden Beschichtung (66) beschichtet sind.

4. Fahrzeug nach einem der Ansprüche 1 - 3,
**dadurch gekennzeichnet,**
**dass** die Anschlagmittel (41, 42, 43, 44) dem Fahrgestellrahmen (26) abgewandt Anschlagabschnitte (49, 50, 51, 52) aufweisen.

5. Fahrzeug nach Anspruch 4,
**dadurch gekennzeichnet,**
**dass** das Dach (8) Aufnahmeabschnitte (56, 57, 58, 59) zum zumindest abschnittsweisen Aufnehmen der Anschlagabschnitte (49, 50, 51, 52) aufweist.

6. Fahrzeug nach einem der Ansprüche 1 - 5,
**dadurch gekennzeichnet,**
**dass** die Anschlagmittel (41, 42, 43, 44) zumindest abschnittsweise flexibel sind, wobei die Anschlagmittel (41, 42, 43, 44) insbesondere zumindest abschnittsweise seilförmig, gurtförmig, kettenförmig oder biegestabförmig sind.

7. Fahrzeug nach einem der Ansprüche 1 - 6,
**dadurch gekennzeichnet,**
**dass** mit Hilfe der Anschlagmittel (41, 42, 43, 44) ausschließlich Zugkräfte (Z) übertragbar sind.

8. Fahrzeug nach einem der Ansprüche 1 - 7,
**dadurch gekennzeichnet,**
**dass** der Fahrgestellrahmen (26) Längsträger (27, 28) und senkrecht zu den Längsträgern (27, 28) angeordnete Querträger (29, 30, 31, 32, 33) aufweist, wobei die Anschlagmittel (41, 42, 43, 44) mit den Längsträgern (27, 28) und/oder mit den Querträgern (29, 30, 31, 32, 33) verbunden sind.

9. Fahrzeug nach einem der Ansprüche 1 - 8,
**gekennzeichnet durch**
Fahrgestellrahmen-Fahrzeugaufbau-Schnittstellen (36, 37, 38, 39), mit deren Hilfe der Fahrgestellrahmen (26) mit dem Fahrzeugaufbau (2) verbunden ist.

10. Fahrzeug nach Anspruch 9,
**dadurch gekennzeichnet,**
**dass** die Fahrgestellrahmen-Fahrzeugaufbau-Schnittstellen (36, 37, 38, 39) zwischen Anbindungspunkten (45, 46, 47, 48), an denen die Anschlagmittel (41, 42, 43, 44) mit dem Fahrgestellrahmen (26) verbunden sind, angeordnet sind.

11. Fahrzeug nach einem der Ansprüche 1 - 10,
**dadurch gekennzeichnet,**
**dass** die Anschlagmittel (41, 42, 43, 44) von den tragenden Strukturen (16, 17, 18) ausgehend schräg zu dem Fahrgestellrahmen (26) hingeführt sind.

12. Fahrzeug nach einem der Ansprüche 1 - 11,
**gekennzeichnet durch**
Umlenkelemente (60, 61) zum Umlenken der Anschlagmittel (41, 42, 43, 44).

13. Fahrzeug nach einem der Ansprüche 1 - 12,
**gekennzeichnet durch**
Kraftübertragungselemente (67, 68, 71, 72), mit deren Hilfe die Anschlagmittel (41, 42, 43, 44) mit dem Fahrgestellrahmen (26) verbunden sind, wobei sich die Kraftübertragungselemente (67, 68, 71, 72) ausgehend von dem Fahrgestellrahmen (26) nach außen in Richtung der tragenden Strukturen (16, 17, 18) erstrecken.

14. Fahrzeug nach Anspruch 13,
**dadurch gekennzeichnet,**
**dass** sich eine jeweilige Querschnittsfläche der Kraftübertragungselemente (67, 68) ausgehend von dem Fahrgestellrahmen (26) nach außen in Richtung der tragenden Strukturen (16, 17, 18) verkleinert.

15. Fahrzeug nach einem der Ansprüche 1 - 14,
**gekennzeichnet durch**
rohrförmige Führungselemente (69, 70) zum Führen der Anschlagmittel (41, 42, 43, 44) von den tragenden Strukturen (16, 17, 18) ausgehend hin zu dem Fahrgestellrahmen (26), wobei die Anschlagmittel (41, 42, 43, 44) zumindest abschnittsweise innerhalb der Führungselemente (69, 70) angeordnet sind.

## Claims

1. Vehicle (1A, 1B, 1C, 1D), comprising
a chassis frame (26),
a vehicle body (2) supported by the chassis frame (26), and
a plurality of sling means (41, 42, 43, 44) connected to the chassis frame (26),
wherein the vehicle body (2) comprises support structures (16, 17, 18) and a roof (8), and
**characterized in that**
that the sling means (41, 42, 43, 44) are guided through the support structures (16, 17, 18) from the chassis frame (26) to the roof (8).

2. Vehicle according to claim 1,
**characterized in that**
the support structures (16, 17, 18) are load-bearing vehicle pillars, in particular A-pillars, B-pillars, and/or C-pillars.

3. Vehicle according to claim 1 or 2,
**characterized in that**
the support structures (16, 17, 18) are coated on an inner side and/or the sling means (41, 42, 43, 44) are coated on an outer side with a friction-reducing coating (66).

4. Vehicle according to one of claims 1 to 3,
**characterized in that**
the sling means (41, 42, 43, 44) comprise sling sections (49, 50, 51, 52) facing away from the chassis frame (26).

5. Vehicle according to claim 4,
**characterized in that**
the roof (8) comprises receiving sections (56, 57, 58, 59) for receiving at least some of the sling sections (49, 50, 51, 52).

6. Vehicle according to one of claims 1 to 5,
**characterized in that**
the sling means (41, 42, 43, 44) are flexible at least in sections, wherein the sling means (41, 42, 43, 44) are in particular at least in sections rope-shaped, belt-shaped, chain-shaped or bendable rod-shaped.

7. Vehicle according to one of claims 1 to 6,
**characterized in that**
only tensile forces (Z) can be transmitted with the aid of the sling means (41, 42, 43, 44).

8. Vehicle according to one of claims 1 to 7,
**characterized in that**
the chassis frame (26) comprises longitudinal beams (27, 28) and cross beams (29, 30, 31, 32, 33), wherein the sling means (41, 42, 43, 44) are connected to the longitudinal beams (27, 28) and/or to the cross beams (29, 30, 31, 32, 33).

9. Vehicle according to one of claims 1 to 8,
**characterized by**
chassis frame-vehicle body interfaces (36, 37, 38, 39), by means of which the chassis frame (26) is connected to the vehicle body (2).

10. Vehicle according to claim 9,
**characterized in that**
the chassis frame-vehicle body interfaces (36, 37, 38, 39) are arranged between connection points (45, 46, 47, 48) at which the sling means (41, 42, 43, 44) are connected to the chassis frame (26).

11. Vehicle according to any of claims 1 to 10,
**characterized in that**
the sling means (41, 42, 43, 44) are guided diagonally from the support structures (16, 17, 18) to the chassis frame (26).

12. Vehicle according to one of claims 1 to 11,
**characterized by**
deflection elements (60, 61) for deflecting the sling means (41, 42, 43, 44).

13. Vehicle according to one of claims 1 to 12,
**characterized by**
force transmission elements (67, 68, 71, 72) by means of which the sling means (41, 42, 43, 44) are connected to the chassis frame (26), wherein the force transmission elements (67, 68, 71, 72) extend outwards from the chassis frame (26) towards the support structures (16, 17, 18).

14. Vehicle according to claim 13,
**characterized in that**
a respective cross-sectional area of the force transmission elements (67, 68) decreases outwardly from the chassis frame (26) toward the support structures (16, 17, 18).

15. Vehicle according to any one of claims 1 to 14,
**characterized by**
tubular guidance elements (69, 70) for guiding the sling means (41, 42, 43, 44) from the support structures (16, 17, 18) to the chassis frame (26), wherein the sling means (41, 42, 43, 44) are arranged at least in sections within the guidance elements (69, 70).

## Revendications

1. Véhicule (1A, 1B, 1C, 1D), comprenant
un châssis (26),
une carrosserie de véhicule (2) supportée par le châssis (26), et
une pluralité de moyens d'élingue (41, 42, 43, 44) reliés au châssis (26),
dans lequel la carrosserie de véhicule (2) comprend des structures de support (16, 17, 18) et un toit (8), et
**caractérisé en ce que**
les moyens d'élingue (41, 42, 43, 44) sont guidés à travers les structures de support (16, 17, 18) du châssis (26) au toit (8).

2. Véhicule selon la revendication 1,
**caractérisé en ce que**
les structures de support (16, 17, 18) sont des montants de véhicule porteurs, en particulier des montants A, des montants B et/ou des montants C.

3. Véhicule selon la revendication 1 ou 2,
**caractérisé en ce que**
les structures de support (16, 17, 18) sont revêtues sur un côté intérieur et/ou les moyens d'élingue (41, 42, 43, 44) sont revêtus sur un côté extérieur avec un revêtement réduisant le frottement (66).

4. Véhicule selon l'une quelconque des revendications 1 à 3,
**caractérisé en ce que**
les moyens d'élingue (41, 42, 43, 44) comprennent des sections d'élingue (49, 50, 51, 52) orientées à l'opposé du châssis (26).

5. Véhicule selon la revendication 4,
**caractérisé en ce que**
le toit (8) comprend des sections de réception (56, 57, 58, 59) pour recevoir au moins certaines des sections d'élingue (49, 50, 51, 52).

6. Véhicule selon l'une quelconque des revendications 1 à 5,
**caractérisé en ce que**
les moyens d'élingue (41, 42, 43, 44) sont flexibles au moins par sections, dans lequel les moyens d'élingue (41, 42, 43, 44) sont en particulier au moins par sections en forme de câble, en forme de courroie, en forme de chaîne ou en forme de barre flexible.

7. Véhicule selon l'une quelconque des revendications 1 à 6,
**caractérisé en ce que**
seules des forces de traction (Z) peuvent être transmises à l'aide des moyens d'élingue (41, 42, 43, 44).

8. Véhicule selon l'une quelconque des revendications 1 à 7,
**caractérisé en ce que**
le châssis (26) comprend des longerons (27, 28) et des traverses (29, 30, 31, 32, 33), les moyens d'élingue (41, 42, 43, 44) étant reliés aux longerons (27, 28) et/ou aux traverses (29, 30, 31, 32, 33).

9. Véhicule selon l'une quelconque des revendications 1 à 8,
**caractérisé par**
des interfaces châssis-carrosserie de véhicule (36, 37, 38, 39), au moyen desquelles le châssis (26) est relié à la carrosserie de véhicule (2).

10. Véhicule selon la revendication 9,
**caractérisé en ce que**
les interfaces châssis-carrosserie de véhicule (36, 37, 38, 39) sont agencées entre des points de liaison (45, 46, 47, 48) au niveau desquels les moyens d'élingue (41, 42, 43, 44) sont reliés au châssis (26).

11. Véhicule selon l'une quelconque des revendications 1 à 10,
**caractérisé en ce que**
les moyens d'élingue (41, 42, 43, 44) sont guidés en diagonale des structures de support (16, 17, 18) au châssis (26).

12. Véhicule selon l'une quelconque des revendications 1 à 11,
**caractérisé par**
des éléments de déviation (60, 61) pour dévier les moyens d'élingue (41, 42, 43, 44).

13. Véhicule selon l'une quelconque des revendications 1 à 12,
**caractérisé par**
des éléments de transmission de force (67, 68, 71, 72) au moyen desquels les moyens d'élingue (41, 42, 43, 44) sont reliés au châssis (26), dans lequel les éléments de transmission de force (67, 68, 71, 72) s'étendent vers l'extérieur du châssis (26) vers les structures de support (16, 17, 18).

14. Véhicule selon la revendication 13,
**caractérisé en ce que**
une surface de section transversale respective des éléments de transmission de force (67, 68) diminue vers l'extérieur du châssis (26) vers les structures de support (16, 17, 18).

15. Véhicule selon l'une quelconque des revendications 1 à 14,
**caractérisé par**
des éléments de guidage tubulaires (69, 70) pour guider les moyens d'élingue (41, 42, 43, 44) des structures de support (16, 17, 18) au châssis (26), dans lequel les moyens d'élingue (41, 42, 43, 44) sont agencés au moins en partie à l'intérieur des éléments de guidage (69, 70).
